# EUROPÄISCHE PATENTSCHRIFT

(11) **EP 1 182 406 B1**
(45) Veröffentlichungstag und Bekanntmachung des Hinweises auf die Patenterteilung: **02.03.2005**
(21) Anmeldenummer: 01120338.7
(22) Anmeldetag: 24.08.2001
(51) Int. Cl.: F24D 13/02

(54) **Plattenförmiger Flächenheizkörper mit in Kanäle eingelegten und verklebten Heizleitern, Verfahren zum Einbringen der Heizleiter und Rollenanordnung zur Durchführung des Verfahrens**
Plate-like heating panel with electric resistors placed and glued in channels, method for placing the resistors and roller arrangement for carrying out that method
Paneau chauffant avec résistances chauffantes placées par collage dans des canaux, procédé pour placer ces résistances et agencement de rouleaux pour réaliser ce procédé

(30) Priorität: 24.08.2000 DE 10041546
(43) Veröffentlichungstag der Anmeldung: 27.02.2002
(73) Patentinhaber: Vasily Marmor Import GmbH, 90408 Nürnberg (DE)
(72) Erfinder: Kolar, Frantisek, 91338 Igensdorf (DE); Sidiropoulos, Akritas, 90408 Nürnberg (DE)
(74) Vertreter: Buchau, Erhard, Dipl.-Ing.

(56) Entgegenhaltungen:
- DE-A- 2 336 902
- DE-A- 2 849 260
- DE-A- 3 934 393
- DE-C- 19 855 591
- US-A- 5 461 213

## Beschreibung

Die Erfindung bezieht sich auf einen plattenförmiger Flächenheizkörper, insbesondere mit einer Steinplatte aus Naturstein, mit auf ihrer Rückseite in Kanäle eingelegten und verklebten Heizleitern, welche mäander- oder spiralförmig mit weitgehend geraden Längsabschnitten und mit gekrümmten oder geraden Umlenkabschnitten verlaufen.

Ein solcher Flächenheizkörper bzw. eine Heizplatte ist durch die DE 39 17 873 C2 bekannt. Weil bei dieser Heizplatte die Heizleiter in bezug auf temperaturabhängige Längenänderungen nicht kompensiert sind, so ist im Mäanderbereich der Heizleiter eine Kanalerweiterung, insbesondere Kanalverbreiterung, angeordnet, so daß Spielraum zum Dehnen oder Schrumpfen der Heizleiter geschaffen ist.

Gegenstand der Erfindung ist demgegenüber gemäß Oberbegriff des Anspruchs 1 ein plattenförmiger Flächenheizkörper der eingangs genannten Art, bei dem darüber hinaus die Heizleiter in bezug auf eine temperaturabhängige Längenänderung in sich kompensiert sind. Bei einem solchen temperatur-kompensierten Heizleiter ist dieser z.B. um eine Glasfaserseele spiralig gewickelt und von einem Mantel aus Glasfasern umgeben, wobei das Ganze von einem Mantel oder einer Hülle aus Silikongummi elektrisch isolierend, jedoch thermisch leitend umgeben wird. Bei solchen Heizleitern treten thermisch bedingte Längenänderungen der Heizleiter praktisch nicht auf; damit entfällt die Notwendigkeit, einen Spielraum zum Dehnen oder Schrumpfen der Heizleiter während des Betriebes vorzusehen.

Das Einbringen oder "Einfädeln" der Heizleiter in ihre Kanäle stellt montagetechnisch erhöhte Anforderungen, weil wegen der Kanalkrümmungen der Heizleiter gegen Herausspringen aus dem Kanal, in den er eingelegt ist, gesichert werde muß, zumindest solange, bis der Kleber eine ausreichende Haltefunktion hat. Der Erfindung liegt die Aufgabe zugrunde, den gattungsgemäßen Flächenheizkörper mit seinen Kanälen so auszubilden, daß unter Vermeidung der geschilderten Schwierigkeiten der jeweils in den Kanal eingelegte Heizleiter seine Position ohne zu verrutschen oder herauszurutschen präzise beibehält. Eine Unteraufgabe besteht darin, die Berührungsfläche zwischen Heizleiter und Kanalwandung zu vergrößern.

Erfindungsgemäß wird die gestellte Aufgabe durch die im Kennzeichen des Anspruchs 1 angegebenen Merkmale gelöst, nämlich dadurch, daß die Kanäle zumindest auf einem Teil ihrer Länge mit einer solchen Neigung zur Flächennormalen der Plattenoberfläche verlaufen, daß sich für aufeinanderfolgende Kanalabschnitte eines Mäanders bzw. einer Spirale eine resultierende Kanallänge ergibt, die im Bereich der Kanalöffnung am größten und im Bereich des Kanalgrundes am kleinsten ist.

Vorteilhafte Weiterbildungen sind in den Ansprüchen 2 bis 13 angegeben. - Die mit der Erfindung erzielbaren Vorteile sind vor allem darin zu sehen, daß der in den Kanalgrund eingelegte (noch nicht festgeklebte) Heizleiter, der beim Einlegen einer geringen Zugspannung ausgesetzt wird, im Kanal sich nicht nach oben bewegen kann, weil die resultierende Kanallänge aufeinanderfolgender Kanalabschnitte am Kanalgrund am kleinsten ist (stabile Kanallage). Demgegenüber ist die resultierende Kanallänge bei Kanälen, die senkrecht von oben in die Steinplatte eingebracht sind oder eine entsprechende eingeformte Ausführung bei einer Kunststeinplatte haben, am Kanalgrund und an der Kanalöffnung gleich, was eine labile Kanallage des Heizleiters (solange er noch nicht festgeklebt ist) ergibt.

Gegenstand der Erfindung ist auch ein Verfahren, insbesondere zum Einbringen der Heizleiter in die Kanäle bei einem Flächenheizkörper nach einem der Ansprüche 1 bis 11,

wobei in den Kanalgrund ein flüssiger oder breiiger Kleber dosiert in einer solchen ersten Menge eingebracht wird, daß er den anschließend in den Kanalgrund eingefügten und gegen diesen gedrückten Heizleiter, der bevorzugt einen Rundquerschnitt mit einem im Vergleich zur Kanalweite kleineren Durchmesser hat, im Bereich der unteren Heizleiterhälfte benetzt und das untere Kanalvolumen zwischen dem Heizleiter, dem Kanalgrund und den Kanalflanken ausfüllt, und wobei das Kanalvolumen oberhalb des Heizleiters mit einer zweiten Menge des Klebers aufgefüllt wird, so daß der Heizleiter allseitig vom Kleber umgeben wird, wie es im wesentlichen durch die DE 28 49 260 A bekannt ist. Durch die Erfindung soll zusätzlich zur Erzielung eines gutem Wärmeüberganges von den Heizleitern auf den umgebenden Flächenheizkörper eine Mechanisierung der Fertigung erreicht werden

Gemäß Kennzeichen des Anspruchs 14 wird diese Aufgabe dadurch gelöst, daß das Einlegen des Heizleiters in den Kanalgrund nach Einbringen der ersten Menge des Klebers mit einer in den Kanal mit seitlichem Spiel passenden Andruck- und Vorschubrolle erfolgt, welche mit ihrem entsprechend dem Heizleiter profilierten Rollenumfang letzteren in den Kanalgrund drückt und welcher während der Bewegung längs des jeweiligen Kanalabschnitts der Heizleiter von einer Vorratsrolle oder dergl. über eine, vorzugsweise in Vorschubrichtung geneigte, Kabelführung zugeführt wird. Dabei ist es günstig, wenn die Andruck- und Vorschubrolle und die Kabelführung der Kontur von in Vorschubrichtung zu durchlaufenden Kanalbögen oder -abrundungen gelenkig zu folgen vermögen.

Demgemäß ist Gegenstand der Erfindung auch eine Rollenanordnung zur Durchführung des im vorstehenden Absatz erläuterten Verfahrens, welches gemäß Anspruch 16 dadurch gekennzeichnet ist, daß am unteren Ende einer Lenkstange ein Lagerkörper drehbeweglich um die Achse der Lenkstange angelenkt ist und daß der Lagerkörper ein Radlager für die Andruck- und Vorschubrolle sowie ein Führungselement für den Heizleiter aufweist.

Durch das Verfahren nach der Erfindung ist die vorteilhafte Eigenschaft, daß der Heizleiter im fertig montierten Zustand allseitig vom wärmeleitenden Kleber umgeben ist und der Kleber auch mit den Kanalwänden und dem Kanalgrund einen innigen wärmeleitenden Kontakt hat, kombinierbar mit der besonderen Ausbildung der zumindest auf Teillängen der Kanäle geneigten Kanalwandung, wodurch die stabile Kanallage des Heizleiters beim Einlegen immer gewährleistet ist.

Weitere Merkmale und Vorteile des Gegenstandes der Erfindung sowie dessen Aufbau und Funktion werden im folgenden anhand mehrere, in der Zeichnung dargesteller Ausführungsbeispiele noch näher erläutert.

In der Zeichnung zeigt in vereinfachter, z.T. schematischer Darstellung:
- **Fig. 1**: ein erstes Ausführungsbeispiel für einen Flächenheizkörper nach der Erfindung, in einer Draufsicht auf die Rückseite, mit einem ersten Kanalmuster;
- **Fig. 2**: einen Querschnitt nach der Schnittebene II - II aus Fig. 1, verkleinert;
- **Fig. 3**: einen Längsschnitt nach der Schnittebene III - III aus Fig. 1, wobei eine Schleifscheibe in geneigter Arbeitsposition schematisch angedeutet ist;
- **Fig. 4**: ein zweites Ausführungsbeispiel für einen Flächenheizkörper, mit einem zweiten Kanalmuster, in entsprechender Darstellung zu Fig. 1;
- **Fig. 5**: einen Querschnitt nach der Schnittebene V - V aus Fig. 4;
- **Fig. 6**: einen Längsschnitt nach der Schnittebene VI - VI aus Fig. 4, wobei ein Fingerschleifer in geneigter Arbeitsposition schematisch angedeutet ist;
- **Fig. 7**: vier verschiedene Beispiele für Umlenkabschnitte, die bogenförmig bzw. gerade mit Abrundungen im Übergangsbereich ausgebildet sind, schematisch dargestellt in der rechten Hälfte der Rückseite eines Plattenheizkörpers, der im übrigen mit Längsabschnitten nach Fig. 1 und in der anderen Hälfte mit zwei geraden Umlenkabschnitten nach Fig. 1 versehen ist.;
- **Fig. 8**: einen Längsschnitt durch die bearbeitete Steinplatte nach Fig. 7 mit schematischer Darstellung zweier Werkzeuge zur Illustration, daß bei diesem Beispiel außer den Längsabschnitten auch die Umlenkabschnitte der linken Hälfte mit einer Schleifscheibe und die bogenförmigen oder abgerundeten Umlenkabschnitte der rechten Hälfte mit einem Fingerschleifer bearbeitet werden;
- **Fig. 9**: einen Querschnitt nach der Schnittebene IX - IX aus Fig. 7, wobei zwei gerade und ein bogenförmiger Umlenkabschnitt geschnitten sind;
- **Fig. 10**: teils im Aufriß, teils im Schnitt schematisch eine Dosiereinrichtung für Kleber zum gleichzeitigen dosierten Einbringen von ersten oder zweiten-Kleberportionen in mehrere Kanäle einer Steinplatte;
- **Fig. 11**: einen Querschnitt durch einen Teil der Steinplatte, wobei zwei Heizleiter in das Kleberbett am Kanalgrund bereits eingelegt und bei zwei weiteren-Heizleitern die Kanäle durch Einbringen der zweiten Kleberportionen bereits aufgefüllt sind;
- **Fig. 12**: die Einzelheit XII aus Fig. 11, vergrößert und im Detail;
- **Fig. 13**: den Kopf einer Rollenanordnung, mit der ein Heizleiter in einen Kanal einer Steinplatte eingelegt wird, teils im Schnitt, teils in Ansicht;
- **Fig. 14**: ein weiteres Ausführungsbeispiel einer Heizplatte, vergrößert im Detail, mit drei kanalgrundseitig abgerundeten Längskanälen und folgenden Montagezuständen: Ohne Heizleiter, mit eingelegtem Heizleiter und mit verklebtem Heizleiter;
- **Fig. 15**: eine Schleifscheibenanordnung in vereinfachter Darstellung mit am Außenumfang abgerundeten Schleifscheiben zum Herstellen von geraden, an ihrem Grunde abgerundeten Kanälen, wie in Fig. 14 oder Fig. 16 dargestellt;
- **Fig. 16**: eine Heizplatte im Querschnitt, bei der mit einem Werkzeug nach Fig. 15 7 gerade, am Grunde abgerundete Kanäle eingearbeitet sind,; und
- **Fig. 17**: einen Fingerschleifer in Bearbeitungsposition in entsprechender Darstellung zu Fig. 6, dessen Bearbeitungskopf eine kugelige bzw. halbkugelige Kontur aufweist.

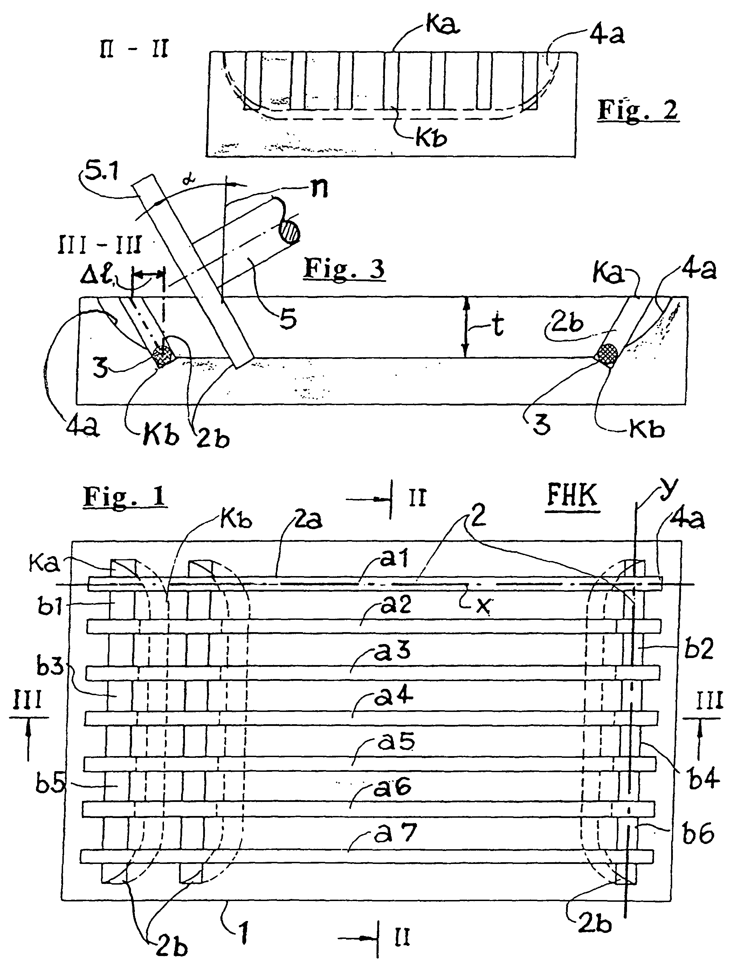

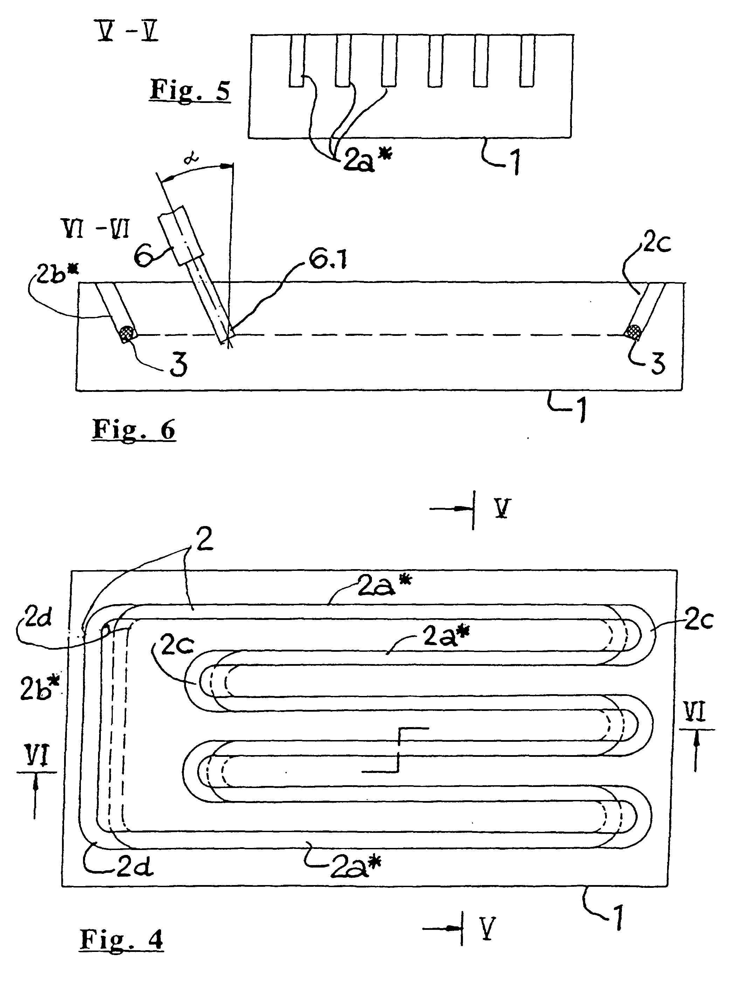

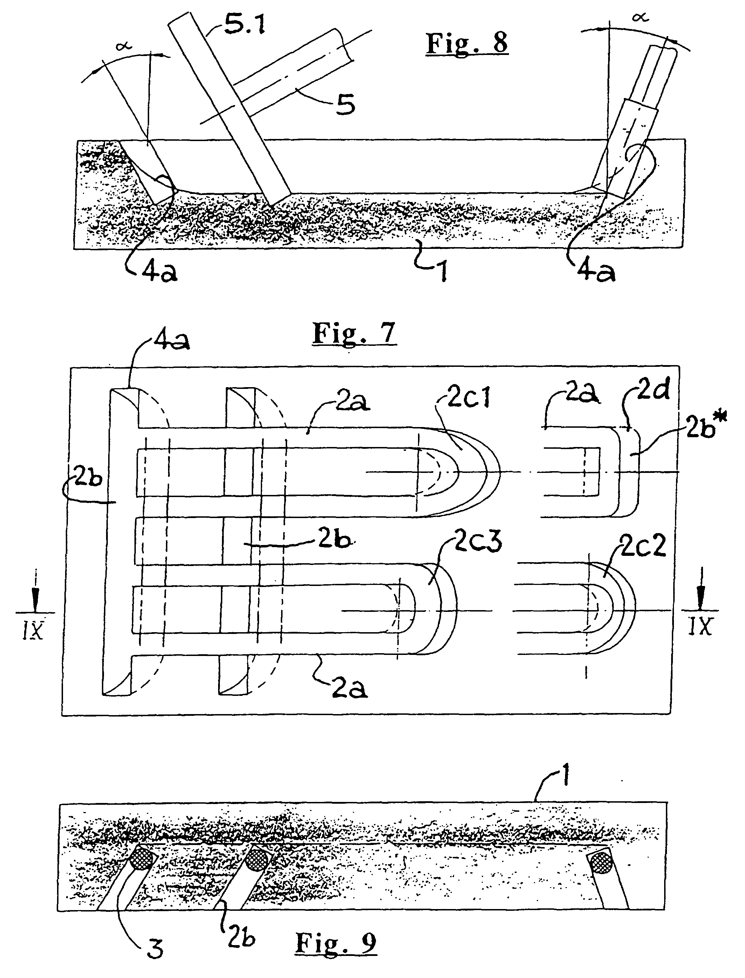

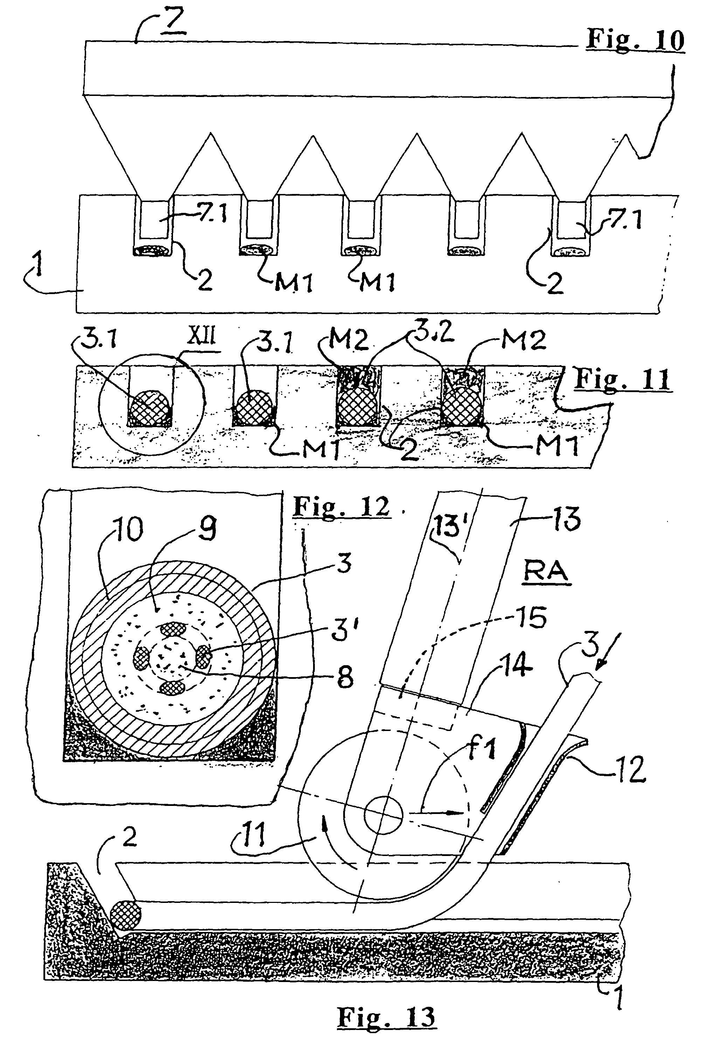

Fig. 1 zeigt die Rückseite eines plattenförmigen Flächenheizkörpers FHK im Rohzustand. Dieser besteht insbesondere aus einer Naturssteinplatte, z.B. aus Marmor. Grundsätzlich könnte es sich auch um eine Kunststeinplatte handeln. Im folgenden ist deshalb von einer Steinplatte 1 die Rede. Wie es Fig. 1 in Verbindung mit Fig. 11 und die eingangs erwähnte DE 39 17 873 C2 zeigen, sind auf der Rückseite der Steinplatte 1 als Ganzes mit 2 bezeichnete Kanäle eingebracht, d.h. eingeschliffen, eingefräst oder (bei einer Kunststeinplatte) durch Gießen, Pressen oder Spritzen hergestellt. In diese Kanäle 2 sind die Heizleiter 3 (Fig. 11 und 12) eingelegt und durch Verkleben in ihrer Lage gesichert. Die Kanäle 2 und demnach auch die in diese eingelegten Heizleiter 3 verlaufen mäander- oder spiralförmig mit weitgehend geraden Längsabschnitten 2a und mit geraden Umlenkabschnitten 2b (Fig. 1) oder mit gekrümmten Umlenkabschnitten ( Fig. 4, Fig. 7), worauf noch näher eingegangen wird. Die Heizleiter 3 (Fig. 11 und 12) sind in bezug auf eine temperaturabhängige Längenänderung in sich kompensiert, worauf ebenfalls noch eingegangen wird.

Nach der Erfindung verlaufen die Kanäle 2 zumindest auf einem Teil ihrer Länge mit einer solchen Neigung α zur Flächennormalen n der Plattenoberfläche, daß sich für aufeinanderfolgende Kanalabschnitte 2a - 2b eines Mäanders bzw. einer Spirale eine resultierende Kanallänge ergibt, die im Bereich der Kanalöffnung Ka am größten und im Bereich des Kanalgrundes Kb am kleinsten ist, vergl. hierzu zunächst die Darstellung nach Fig. 1 bis 3.

Im einzelnen zeigen Fig. 1 bis 3, daß die Längsabschnitte 2a der Kanäle 2 mit einer Schleifscheibe (oder einem Scheibenfräser) in die Steinplatte 1 eingearbeitet sind, wobei sich an den Enden der Längsabschnitte die Einlauf- oder Auslaufkonturen 4a ergeben. Zweckmäßigerweise wird mit einem Multischeiben-Werkzeug gearbeitet, bei dem entsprechend der Anzahl von z.B. 7 Längsabschnitten 7 Schleifscheiben auf einer gemeinsamen Antriebswelle verdrehgesichert gehalten sind (nicht dargestellt). Die geraden Umlenkabschnitte 2b, von denen sich einer am rechten Ende und zwei parallel zueinander am linken Ende der Längsabschnitte 2a befinden und diese schneiden, sind in bezug auf eine Flächennormale n in Längsrichtung nach außen geneigt, wie es Fig. 1 und 3 verdeutlichen, wobei der Neigungswinkel α im Beispiel etwa 30° beträgt. In Fig. 3 ist der Neigungswinkel α anhand eines im Ausschnitt dargestellten Schleifwerkzeugs 5 mit Schleifscheibe 5.1 demonstriert, mit welchem gerade ein Umlenkabschnitt 2b geschliffen wird. In die ändern beiden Umlenkabschnitte 2b sind zu Demonstrationszwecken Heizleiter 3 eingelegt, um zu zeigen, daß die Verbindungslinie zwischen den beiden äußeren Umlenkabschnitten 2b am Kanalgrund, nämlich Kb - Kb, erkennbar kürzer ist als die Verbindungslinie Ka - Ka im Bereich der Kanalöffnung. Wenn man sich in das Kanalmuster nach Fig. 1 einen Heizleiter eingelegt denkt, welcher abwechselnd die Längs- und Umlenkabschnitte 2a, 2b mäandrierend durchläuft, z.B. in der Reihenfolge a1 - b1 - a2 - b2 - a3 - b3 .... u.s.w. bis a7, so erkennt man, daß bei diesem Beispiel der jeweilige Längsabschnitt des Heizleiters an seinen beiden Enden um je eine Strecke Δ1 verkürzt ist, die sich ergibt aus der Beziehung Δ1 = t tan α, worin t = Kanaltiefe und α = Neigungswinkel bedeuten, vergl. Fig. 3. Bei einem Neigungswinkel von α = 45° wäre damit t = Δ1.

Aus Vorstehendem ergibt sich, daß beim Beispiel nach Fig. 1 bis 3 die Kanalneigung α im Bereich der Umlenkabschnitte 2b bzw. der zugehörigen Unterabschnitte b1 - b6 vorgesehen ist. Ferner ist dieses Beispiel durch ein solches Kanalmuster charakterisiert, daß vertikal eingebrachte Längsabschnitte 2a in ihrem Endbereich durch mit Neigung α nach außen eingebrachte Umlenkabschnitte 2b miteinander verbunden werden. Als weiteres Charakteristikum dieses Beispiels ergibt sich, daß die Längsabschnitte 2a und auch die Umlenkabschnitte 2b gerade verlaufen und ihre Hauptrichtungen x, y einander unter einem rechten Winkel kreuzen (Fig. 1). Ein rechter Kreuzungswinkel wird wegen gleichförmiger Biegeradien für die Heizleiter bevorzugt. Um bei diesem Beispiel den Biegeradius des Heizleiters 3 beim Übertritt von einem Längsabschnitt 2a in einen Umlenkabschnitt 2b bzw. umgekehrt etwas zu vergrößern, ist die lichte Weite der Umlenkabschnitte etwas größer als diejenige der Längsabschnitte. Es wäre auch möglich, die Übertrittsbereiche 2a - 2b bzw. 2b - 2a mit einem Fingerschleifer oder Fingerfräser etwas abzurunden, wodurch sich die Verbreiterung der Umlenkkanäle 2b erübrigen würde.

Herstellungstechnisch günstig ist es, wenn die geraden Längs-und Umlenkabschnitte 2a, 2b mit einer Schleifscheibe in die Steinplatte eingearbeitet werden. Weil in diesem Beispiel die Umlenkabschnitte um den Winkel α nach außen geneigt sind, wird die Schleifscheibe 5.1 mit dem gleichen Neigungswinkel α zur Bearbeitung positioniert (Fig. 3). Grundsätzlich ist es auch möglich, mit einem speziellen Scheibenfräser zu arbeiten ebenso wie es möglich ist, be mehreren parallelen und geraden Längs- oder Umlenkabschnitten mit einem Mehrfach-Werkzeug zu arbeiten, so daß mehrere Kanäle gleichzeitig geschliffen bzw. gefräst werden können.

Beim zweiten Ausführungsbeispiel nach Fig. 4 bis 6 verlaufen.die geneigten Umlenkabschnitte 2c für die Längsabschnitte 2a* bogenförmig, und der gerade Umlenkabschnitt 2b* im linken Endbereich der Steinplatte 1, der die beiden äußeren Längsabschnitte 2a* miteinander verbindet, hat zwei abgerundete oder bogenförmige Übergänge 2d zu den beiden geraden Längsabschnitten 2a*. Bei diesem Beispiel sind alle Kanalabschnitte 2a*, 2b*, 2c und 2d mit einem Fingerschleifer 6.1 eines entsprechenden Schleifwerkzeugs 6 herausgearbeitet worden, welcher bei den geneigten Umlenkabschnitten 2b*, 2c und bei den abgerundeten Übergängen 2d mit entsprechender Neigung, z.B. mit dem Neigungswinkel α (Fig. 6) geführt wird. Bei den geraden Längsabschnitten 2a* ohne Neigung wird der Fingerschleifer 6.1 senkrecht geführt; wenn er in den Übergangsbereich 2d gelangt, steigt sein Neigungswinkel α allmählich von 0° auf z.B. 30° an, wobei dann mit diesem Anstellwinkel der Umlenkabschnitt 2b* durchlaufen wird bis zum zweiten Übergangsbereich 2d, wo der Anstellwinkel des Fingerschleifers 6.1 allmählich wieder auf 0° zurückgeht, wenn der Bereich 2d durchfahren wird.
Ein Vorteil dieses Beispiels ist, daß nur soviel Plattenmaterial abgetragen wird, wie es zum Einlegen des Heizleiters 3 benötigt wird. In diesem Beispiel sind sowohl bogenförmige Umlenkabschnitte 2c als auch ein gerader Umlenkabschnitt 2b* mit abgerundeten oder bogenförmigen Übergängen 2d zwischen jeweils zwei Längsabschnitten 2a*, 2a* vorgesehen.

Das Beispiel nach Fig. 7 bis 9 stellt gewissermaßen eine Kombination aus dem ersten und zweiten Ausführungsbeispiel dar. Hierbei sind die geraden Längsabschnitte 2a und die im linken Endbereich angeordneten beiden Umlenkabschnitte 2b mit einer Schleifscheibe 5.1 (siehe Fig. 8) herausgearbeitet, so daß sich wieder die Auslaufkonturen 4a ergeben. Die Längsabschnitte 2a sind in Fig. 7 verkürzt dargestellt (in Wirklichkeit erstrecken sie sich über die ganze Platte 1), damit Platz gewonnen wird zur schematischen Darstellung der verschiedenen Umlenkabschnitte im rechten Teil der Fig. 7. Die Umlenkabschnitte 2c1 bis 2c3 haben unterschiedliche Krümmungsradien, welche bei (2c1) am kleinsten, bei (2c3) am größten sind und bei (2c2) einen dazwischen liegenden Wert haben. 2d ist wieder ein abgerundeter Übergangsbereich zwischen einem geraden Längsabschnitt 2a und einem geraden Umlenkabschnitt 2b*. In Fig. 8 ist außer der Schleifscheibe 5.1, mit der gerade ein geneigter Umlenkabschnitt 2b geschliffen wird, auch ein Fingerschleifer 6.1 gezeigt, mit dem gerade ein Bogen oder eine Abrundung mit Neigungswinkel α eingearbeitet wird.

Die Kanalneigung kann bei den gezeigten Beispielen im Bereich zwischen 5° und 85° liegen und beträgt vorzugsweise 20° bis 40°, insbesondere ca. 30°.

. Aus Vorstehendem ergibt sich, daß zumindest die Kanalbögen, d.h. die bogenförmigen Umlenkabschnitte 2c, 2c1, 2c2, 2c3 und/oder die abgerundeten Übergangsbereiche 2d, mit einem Fingerschleifer (oder Fingerfräser) in die Steinplatte eingearbeitet werden können.. Darüber hinaus können auch die geraden Längsabschnitte mit einem Fingerschleifer (oder Fingerfräser) in die Steinplatte eingearbeitet werden, wie es anhand von Fig. 4 bis 6 erläutert wurde.

Das Verfahren nach der Erfindung zum Einbringen der Heizleiter 3 in die Kanäle 2 bei einem Flächenheizkörper FHK, wie er vorstehend beschrieben wurde, wird nun anhand der Fig. 10 bis 13 erläutert. Zunächst wird in den Kanalgrund der mit Kanälen 2 versehenen Steinplatte 1 ein flüssiger oder breiiger Kleber dosiert in einer solchen ersten Menge M1 eingebracht, daß er den anschließend in den Kanalgrund eingefiigten und gegen diesen gedrückten Heizleiter im Bereich der unteren Heizleiterhälfte benetzt, wie es in Fig. 11 anhand der beiden linken Heizleiter 3,1 gezeigt ist. Dabei schmiegt sich der Kleber (1. Menge M1) an den Heizleiter 3, 3.1 und an das untere Kanalvolumen an und füllt dieses zwischen dem Heizleiter 3.1, dem Kanalgrund und den Kanalflanken aus. Zum Befüllen der Kanäle 2 mit Kleber dient zweckmäßig eine Dosiervorrichtung 7 mit mehreren Ausflußmündungen 7.1, deren Abstand zueinander demjenigen der Längsabschnitte 2a, 2a* der Kanäle 2 entspricht. Der Heizleiter 3 hat bevorzugt einen Rundquerschnitt mit einem im Vergleich zur Kanalweite etwas kleineren Durchmesser, so daß der Kleber in die Zwischenräume zwischen Heizleiter und Kanalflanken gelangen kann, wie es Fig. 11 zeigt. Beim Einlegen oder Einfädeln des Heizleiters 3 in die Kanäle 2 zeigt sich der besondere Vorteil der Kanalform nach der Erfindung, indem der Heizleiter, obwohl er einen gewissen Drall haben kann, trotzdem am Kanalgrund liegen bleibt und so das Verkleben und Fixieren in stabiler Kanallage des Heizleiters vonstatten geht. Nachdem der Kleber M1 soweit abgebunden bzw. ausgehärtet ist, daß der Heizleiter 3 ausreichend fixiert ist, wird sodann das Kanalvolumen oberhalb des Heizleiters 3 mit einer zweiten Menge M2 des Klebers aufgefüllt, so daß der Heizleiter 3 allseitig vom Kleber umgeben wird, was anhand der beiden rechten Heizleiter 3.2 in Fig. 1 i demonstriert ist. Im allgemeinen wird die zweite Menge M2 des Klebers ausreichend dosiert auf der Rückseite der Steinplatte 1 verteilt und mit einem Spachtel oder dergl. unter Auffüllen der Kanäle 3 glattgestrichen, wobei etwa vorhandener überschüssiger Kleber entfernt wird (nicht dargestellt).Auf jeden Fall ist aufgrund des geschilderten Verfahrens der Heizleiter 3 auf seinem gesamten Umfang ohne Lufteinschlüsse vom Kleber M1, M2 umgeben, und letzterer liegt an den Flanken und dem Grund der Kanäle 3 praktisch vollständig an, so daß sich ein sehr guter Wärmeübergang vom Heizleiter 3 zur Steinplatte 1 ergibt.

Der Schnitt nach Fig. 12 zeigt eine bevorzugte Ausführungsform eines in bezug auf temperaturabhängige Längenänderungen in sich kompensiertendes Heizleiters 3. Bei einem solchen kompensierten Heizleiter 3 ist der eigentliche Heizleiter oder Heizdraht 3' z.B. um eine Glasfaserseele 8 spiralig gewickelt und von einem Mantel 9 aus Glasfasern umgeben, wobei das Ganze von einem Mantel oder einer Hülle 10 aus Silikongummi elektrisch isolierend, jedoch thermisch leitend umgeben wird. Bei solchen Heizleitern treten thermisch bedingte Längenänderungen der Heizleiter praktisch nicht auf; damit entfällt die Notwendigkeit, einen Spielraum zum Dehnen oder Schrumpfen der Heizleiter während des Betriebes vorzusehen.

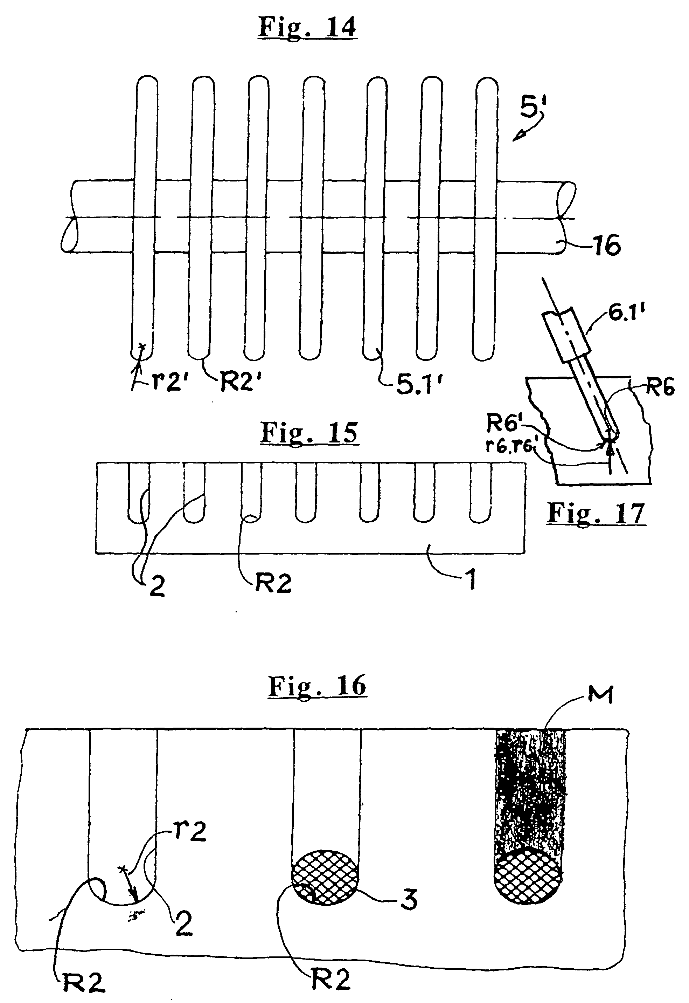

Wie es Fig 13 veranschaulicht, erfolgt das Einlegen des Heizleiters 3 in den Kanalgrund nach Einbringen der ersten Menge M1 des Klebers mit einer in den Kanal 2 mit seitlichem Spiel passenden Andruck- und Vorschubrolle 11, welche mit ihrem entsprechend dem Heizleiter 3 profilierten Rollenumfang letzteren in den Kanalgrund drückt und welcher während der Bewegung längs des jeweiligen Kanalabschnitts, z.B. in Vorschubrichtung f1, der Heizleiter 3 von einer (nicht dargestellten) Vorratsrolle oder dergl. über eine, vorzugsweise in Vorschubrichtung geneigte, aufgeschnitten dargestellte Kabelführung 12 zugeführt wird.

Hierbei ist vorgesehen, daß die Andruck- und Vorschubrolle 11 und die Kabelführung 12 der Kontur von in Vorschubrichtung f1 zu durchlaufenden Kanalbögen oder -abrundungen gelenkig zu folgen vermögen.

Dies wird verwirklicht mit einer als Ganzes mit RA bezeichneten Rollenanordnung, bei welcher am unteren Ende einer Lenkstange 13 ein Lagerkörper 14 drehbeweglich um die Achse 13' der Lenkstange 13 angelenkt ist, wobei der Lagerkörper 14 ein Radlager 15 für die Andruck- und Vorschubrolle 11 sowie ein Führungselement für den Heizleiter (Kabelführung 12) aufweist.

Bestehen die Steinplatten 1 aus Marmor, so wird der verwendete Kleber bevorzugt durch Mischen von Marmorstaub mit einem Fliesenkleber hergestellt.

In den Figuren sind mäanderförmige Kanalmuster dargestellt; es versteht sich, daß die Erfindung sich auch auf spiralige Kanalmuster erstreckt, wie sie z.B. im DE-GM 298 09 333 dargestellt sind.

Beim Ausführungsbeispiel nach Fig. 14 bis 17 sind bei einem Rundquerschnitt der Heizleiter 3 (Fig. 16) die Kanäle 2 an ihrem Grunde in Anpassung an den Heizleiter-Rundquerschnitt abgerundet. Zur Herstellung solcher Kanalgrund-Abrundungen R2 sind die Schleifscheiben bzw. Scheibenfräser 5.1' (Fig. 14) an ihrem Außenumfang und/oder die Fingerschleifer 6.1' an ihrem Bearbeitungskopf (Fig. 17) abgerundet, insbesondere mit halbkreisförmigem Querschnitt R2' bzw. kugeliger Kontur R6'. Im einzelnen sind auf der Welle 16 des im Ausschnitt dargestellten Schleifwerkzeugs 5' z.B. sieben Schleifscheiben 5.1' eingespannt, die an ihrem Außenumfang mit einem Krümmungsradius r2' konvex abgerundet sind, so daß mit ihnen eine konkave Kanalgrundkontur R2 mit einem Krümmungsradius r2 erzeugt werden kann (Fig. 16). Der Fingerschleifer nach Fig. 17 mit seiner kugeligen oder genau genommen halbkugeligen Kontur R6' und dem Krümmungsradius r6' erzeugt -vorzugsweise in Anwendung auf das Ausführungsbeispiel nach Fig. 4 bis 6 - eine konkave Kanalgrundkontur R6 mit dem Krümmungsradius r6.

Wie man aus Fig. 16 erkennt, passen die im wesentlichen halbkreisförmige Kanalgrundkontur R2 und die untere Hälfte des im wesentlichen kreisrunden Heizleiters 3 genau zusammen, wenn dieser in den Kanalgrund eingelegt ist, so daß sich eine großflächige, innige Flächenberührung ergibt, die im Vergleich zu einer rechteckigen Kanalgrundkontur großflächiger ist. Da somit, vor allem bei von oben bzw. außen wirkenden Andruckkräften, ein guter Wärmeübergang in der unteren Hälfte des Heizleiters 3 bereits ohne Kleber gewährleistet ist, genügt es gemäß einer Ausführungsform (dargestellt beim rechten Heizleiter 3 der Fig. 16), den oberhalb des eingelegten Heizleiters 3 verbleibenden Kanalraum bzw. -querschnitt mit Kleber M zu füllen, wobei durch das Gewicht des Heizleiters 3 und des Klebers M und ggfs. durch zusätzlich von außen ausgeübte Andruckkräfte, bis der Kleber fest ist, die Andruckkräfte zwischen Heizleiter 3 und Kanalgrund gewissermaßen fixiert werden.. Darüber hinaus ist es möglich, den Kleber mit einem dessen Wärmeleitfähigkeit erhöhenden Zusatz zu versehen, der z.B. aus Aluminiumnitrit bestehen kann. Dies gilt auch für die Ausführungsbeispiele nach Fig. 1 bis 13.

### Bezugszeichenliste

- FHK: Flächenheizkörper
- 1: Steinplatte
- 2: Kanäle
- 3: Heizleiter
- 2a: Längsabschnitte
- 2b: Umlenkabschnitte
- α: Neigungswinkel
- n: Flächennormale
- Ka: Kanalöffnung
- Kb: Kanalgrund
- 4a: Ein- oder Auslaufkonturen
- 5: Schleifwerkzeug
- 5.1: Schleifscheibe
- a1 - a7: Reihenfolge für (2a)
- b1 - b6: Reihenfolge für (2b) bzw. Unterabschnitte
- Δl: Strecke
- t: Kanaltiefe
- x, y: Hauptrichtungen von (2a, 2b)
- 2c, 2b*: Umlenkabschnitte, weitere
- 2a*: Längsabschnitte, weitere
- 2d: Übergänge, abgerundet
- 6: Schleifwerkzeug, weiteres
- 6.1: Fingerschleifer

- 2c1-2c3: Umlenkabschnitte, weitere
- M1: erste Menge des Klebers
- 3.1: Heizleiter, z.T. verklebt
- 7: Dosiervorrichtung
- 7.1: Ausflußmündungen an (7)
- M2: zweite Menge des Klebers
- 3.2: Heizleiter, vollständ. verklebt
- 3': Heizdraht bzw. eig. Heizleiter
- 8: Glasfaserseele
- 9: Mantel aus Glasfasern
- 10: Hülle aus Silicongummi
- 11: Andruck- u. Vorschubrolle
- f1: Vorschubrichtung
- 12: Kabelführung
- RA: Rollenanordnung
- 13: Lenkstange
- 14: Lagerkörper
- 13': Achse von (13)
- 15: Radlager
- R2: Kanalgrund-Abrundung
- 5.1': Schleifscheiben, weitere
- 6.1': Fingerschleifer, weiterer
- R2': halbkreisförm. Querschnittt
- R6': kugelige Kontur
- 16: Welle
- 5': Schleifwerkzeug, weiteres
- r2': Krümmungsradius von (R2')
- r2: Krümmungsradius von (R2)
- r6': Krümmungsradius von (R6')
- r6: Krümmungsradius von (R6)
- M: Kleber, allgemein

## Patentansprüche

1. Plattenförmiger Flächenheizkörper, insbesondere mit einer Steinplatte aus Naturstein, mit auf ihrer Rückseite in Kanäle eingelegten und verklebten Heizleitern, welche mäanderoder spiralförmig mit weitgehend geraden Längsabschnitten und mit gekrümmten oder geraden Umlenkabschnitten verlaufen, wobei die Heizleiter in bezug auf eine temperaturabhängige Längenänderung in sich kompensiert sind, **dadurch gekennzeichnet, daß** die Kanäle (2) zumindest auf einem Teil ihrer Länge mit einer solchen Neigung (α) zur Flächennormalen (n) der Plattenoberfläche verlaufen, daß sich für aufeinanderfolgende Kanalabschnitte (2a, 2b; 2a*, 2b*; 2a*, 2c) eines Mäanders bzw. einer Spirale eine resultierende Kanallänge ergibt, die im Bereich der Kanalöffnung (Ka) am größten und im Bereich des Kanalgrundes (Kb) am kleinsten ist.

2. Flächenheizkörper nach Anspruch 1, **dadurch gekennzeichnet, daß** die Kanalneigung (α) im Bereich der Umlenkabschnitte (2b, 2b*, 2c, 2c1, 2c2, 2c3) vorgesehen ist.

3. Flächenheizkörper nach Anspruch 1 oder 2, **gekennzeichnet durch** ein Kanalmuster, bei dem vertikal eingebrachte Längsabschnitte (2a) in ihrem Endbereich **durch** mit Neigung (α) nach außen eingebrachte Umlenkabschnitte (2b) miteinander verbunden werden,.

4. Flächenheizkörper nach nach einem der Ansprüche 1 bis 3, **dadurch gekennzeichnet, daß** die Längsabschnitte (2a) und auch die Umlenkabschnitte (2b) gerade verlaufen und ihre Hauptrichtungen (x, y) einander vorzugsweise unter einem rechten Winkel kreuzen.

5. Flächenheizkörper näch Anspruch 4, **dadurch gekennzeichnet, daß** die geradenLängs-und Umlenkabschnitte (2a, 2b) mit einer Schleifscheibe (5.1) oder mit einem Scheibenfräser in die Steinplatte (1) eingearbeitet sind.

6. Flächenheizkörper nach einem der Ansprüche 1 bis 3, **dadurch gekennzeichnet, daß** geneigte Umlenkabschnitte (2c; 2c1, 2c2, 2c3) bogenförmig verlaufen.

7. Flächenheizkörper nach einem der Ansprüche 1 bis 5, **dadurch gekennzeichnet, daß** ein bogenförmiger oder abgerundeter Übergangsbereich (2d) zwischen geraden Längsabschnitten (2a*) und geraden Umlenkabschnitten (2b*) vorgesehen ist.

8. Flächenheizkörper nach Anspruch 7, **dadurch gekennzeichnet, daß** die Kanalneigung (α) im bogenförmigen Übergangsbereich (2d) beginnt und sich längs des Umlenkabschnitts (2b*) fortsetzt.

9. Flächenheizkörper nach einem der Ansprüche 6 bis 8, **dadurch gekennzeichnet, daß** zumindest die Kanalbögen, d.h. die bogenförmigen Umlenkabschnitte (2c, 2c1, 2c2, 2c3) und/oder die abgerundeten Übergangsbereiche (2d), mit einem Fingerschleifer (6.1) oder Fingerfräser in die Steinplatte (1) eingearbeitet sind.

10. Flächenheizkörper nach Anspruch 9, **dadurch gekennzeichnet, daß** auch die geraden Längsabschnitte (2a*) mit einem Fingerschleifer (6.1) oder Fingerfräser in die Steinplatte eingearbeitet sind.

11. Flächenheizkörper nach einem der Ansprüche 6 bis 10, **dadurch gekennzeichnet, daß** die Kanalneigung (α) im Bereich zwischen 5° und 85° liegt und vorzugsweise 20° bis 40°, insbesondere ca. 30°, beträgt.

12. Flächenheizkörper nach einem der Ansprüche 6 bis 11, **dadurch gekennzeichnet, daß** bei einem Rundquerschnitt der Heizleiter (3) die Kanäle (2) an ihrem Grunde in Anpassung an den Heizleiter-Rundquerschnitt abgerundet sind.

13. Flächenheizkörper nach Anspruch 12, **dadurch gekennzeichnet, daß** zur Herstellung der Kanalgrund-Abrundungen (R2, R6) die Schleifscheiben bzw. Scheibenfräser (5,1') an ihrem Außenumfang und/oder die Fingerschleifer (6.1') an ihrem Bearbeitungskopf abgerundet sind, insbesondere mit halbkreisförmigem Querschnitt bzw. kugeliger Kontur (R6').

14. Verfahren zum Einbringen der Heizleiter in die Kanäle bei einem Flächenheizkörper, insbesondere nach einem der Ansprüche 1 bis 11, wobei in den Kanalgrund ein flüssiger oder breiiger Kleber dosiert in einer solchen ersten Menge (M1) eingebracht wird, daß er den anschließend in den Kanalgrund eingefügten und gegen diesen gedrückten Heizleiter (3), der bevorzugt einen Rundquerschnitt mit einem im Vergleich zur Kanalweite kleineren Durchmesser hat, im Bereich der unteren Heizleiterhälfte benetzt und das untere Kanalvolumen zwischen dem Heizleiter (3), dem Kanalgrund und den Kanalflanken ausfüllt,
und wobei das Kanalvolumen oberhalb des Heizleiters (3) mit einer zweiten Menge (M2) des Klebers aufgefüllt wird, so daß der Heizleiter (3) allseitig vom Kleber umgeben wird **dadurch gekennzeichnet, daß** das Einlegen des Heizleiters (3) in den Kanalgrund nach Einbringen einer ersten Menge (M1) des Klebers mit einer in den Kanal (3) mit seitlichem Spiel passenden Andruck- und Vorschubrolle (11) erfolgt, welche mit ihrem entsprechend dem Heizleiter (3) profilierten Rollenumfang letzteren in den Kanalgrund drückt und welcher während der Bewegung längs des jeweiligen Kanalabschnitts der Heizleiter (3) von einer Vorratsrolle oder dergl. über eine, vorzugsweise in Vorschubrichtung (f1) geneigte, Kabelführung (12) zugeführt wird.

15. Verfahren nach Anspruch 14, **dadurch gekennzeichnet, daß** die Andruck- und Vorschubrolle (11) und die Kabelführung (12) der Kontur von in Vorschubrichtung (f1) zu durchlaufenden Kanalbögen oder -abrundungen (2c, 2d) gelenkig zu folgen vermögen.

16. Rollenanordnung zur Durchführung des Verfahrens nach Anspruch 14 oder 15, **dadurch gekennzeichnet, daß** am unteren Ende einer Lenkstange (13) ein Lagerkörper 14) drehbeweglich um die Achse (13.1) der Lenkstange (13) angelenkt ist und daß der Lagerkörper (14) ein Radlager (15) für die Andruck- und Vorschubrolle (11) sowie ein Führungselement (12) für den Heizleiter (3) aufweist.

## Claims

1. A plate-shaped surface heating element, especially comprising a stone plate made of natural stone, with heating channels laid and stuck in channels on its back side, which run in a meander or spiral shape with largely straight longitudinal sections and with curved or straight deflecting sections, wherein the heating conductors are compensated in themselves with reference to a temperature-dependent variation in length, **characterised in that** the channels (2) run at least over a part of their length at such an inclination (α) to the surface normal (n) of the plate surface that for successive channel sections (2a, 2b; 2a*, 2b*; 2a*, 2c) of a meander or a spiral, a resultant channel length is obtained which is largest in the area of the channel opening (Ka) and smallest in the area of the channel base (Kb).

2. The surface heating element according to claim 1, **characterised in that** the channel inclination (α) is provided in the area of the deflecting sections (2b, 2b*, 2c, 2c1, 2c2, 2c3).

3. The surface heating element according to claim 1 or claim 2, **characterised by** a channel pattern in which vertically inserted longitudinal sections (2a) are interconnected in their end region by deflecting sections (2b) inserted with an outward inclination (α).

4. The surface heating element according to any one of claims 1 to 3, **characterised in that** the longitudinal sections (2a) and also the deflecting sections (2b) run straight and their principal directions (x, y) cross one another preferably at right angles.

5. The surface heating element according to claim 4, **characterised in that** the straight and deflecting sections (2a, 2b) are worked into the stone plate (1) using a grinding disk (5.1) or a side-milling cutter.

6. The surface heating element according to any one of claims 1 to 3, **characterised in that** inclined deflecting sections (2c; 2c1, 2c2, 2c3) run in an arc shape.

7. The surface heating element according to any one of claims 1 to 5, **characterised in that** an arc-shaped or rounded transition region (2d) is provided between straight longitudinal sections (2a*) and straight deflecting sections (2b*).

8. The surface heating element according to claim 7, **characterised in that** the channel inclination (α) begins in the arc-shaped transition region (2d) and continues along the deflecting section (2b*).

9. The surface heating element according to any one of claims 6 to 8, **characterised in that** at least the channel bends i.e., the arc-shaped deflecting sections (2c, 2c1, 2c2, 2c3) and/or the rounded transition regions (2d) are worked into the stone plate (1) using a finger grinder (6.1) or end mill.

10. The surface heating element according to claim 9, **characterised in that** the straight longitudinal sections (2a*) are worked into the stone plate using a finger grinder (6.1) or end mill.

11. The surface heating element according to any one of claims 6 to 10, **characterised in that** the channel inclination (α) is in the range between 5° and 85°, and is preferably 20° to 40°, especially about 30°.

12. The surface heating element according to any one of claims 6 to 11, **characterised in that** in a circular cross-section of the heating conductor (3) the channels (2) are rounded at their base to match the circular cross-section of the heating conductor.

13. The surface heating element according to claim 12, **characterised in that** to produce the channel-base rounded sections (R2, R6) the grinding disks or side-milling cutters (5.1') are rounded at their outer circumference and/or the finger grinders (6.1') are rounded at their machining head, especially with a hemispherical cross-section or spherical contour (R6').

14. A method for inserting the heating conductors into the channels in a surface heating elements, especially according to any one of claims 1 to 11, wherein a liquid or pasty adhesive is metered into the channel base in such a first quantity (M1) that it wets the heating conductor (3) then inserted in the channel base and pressed against this, said heating conductor preferably having a circular cross-section with a smaller diameter compared with the channel width, in the area of the lower half of the heating conductor and which fills the lower channel volume between the heating conductor (3), the channel base and the channel flanks, and wherein the channel volume above the heating conductor (3) is filled with a second quantity (M2) of adhesive so that the heating conductor (3) is surrounded by adhesive on all sides, **characterised in that** the laying of the heating conductor (3) in the channel base takes place after inserting a first quantity (M1) of adhesive using a pressure and feed roller (11) which fits in the channel (3) with lateral clearance, which with its roll circumference profiled in accordance with the heating conductor (3) presses said heating conductor into the channel base and to which during movement along the respective channel sections the heating conductor (3) is fed from a supply roller or the like via a cable guide (12) preferably inclined in the feed direction (f1).

15. The method according to claim 14, **characterised in that** the pressure and feed roller (11) and the cable guide (12) are able to flexibly follow the contour of channel bends or rounded sections (2c, 2d) to be passed through in the feed direction.

16. A roller arrangement for implementing the method according to claim 14 or 15, **characterised in that** at the lower end of a connecting rod (13) a bearing body (14) is hinge-mounted rotatably about the axis (13.1) of the connecting rod (13) and that the bearing body (14) has a wheel bearing (15) for the pressure and feed roller (11) and a guide element (12) for the heating conductor (3).

## Revendications

1. Elément chauffant de surface en forme de plaque, en particulier avec une plaque de pierre en pierre naturelle, avec des conducteurs chauffants insérés dans des canaux sur sa face arrière et collés, qui sont agencés en forme de méandre ou de spirale avec des parties longitudinales largement droites et avec des parties de renvoi incurvées ou droites, les conducteurs chauffants étant compensés en soi par rapport à une variation de longueur dépendante de la température, **caractérisé en ce que** les canaux (2) sont agencés au moins sur une partie de leur longueur avec une inclinaison (α) par rapport à la verticale (n) de la surface de plaque telle que, pour des parties de canal (2a, 2b ; 2a*, 2b* ; 2a*, 2c) successives d'un méandre ou d'une spirale, on obtient une longueur de canal résultante qui est la plus grande dans la zone de l'ouverture du canal (Ka) et la plus petite dans la zone du fond du canal (Kb).

2. Elément chauffant de surface selon la revendication 1, **caractérisé en ce que** l'inclinaison du canal (α) est prévue dans la zone des parties de renvoi (2b, 2b*, 2c, 2c1, 2c2, 2c3).

3. Elément chauffant de surface selon la revendication 1 ou 2, **caractérisé par** un modèle de canal, sur lequel des parties longitudinales (2a) introduites verticalement sont reliées entre elles dans leur zone d'extrémité par des parties de renvoi (2b) introduites avec inclinaison (α) vers l'extérieur.

4. Elément chauffant de surface selon l'une quelconque des revendications 1 à 3, **caractérisé en ce que** les parties longitudinales (2a) et également les parties de renvoi (2b) sont agencées de façon rectiligne et leurs directions principales (x, y) se croisent de préférence en formant un angle droit.

5. Elément chauffant de surface selon la revendication 4, **caractérisé en ce que** les parties longitudinales et de renvoi (2a, 2b) droites sont incorporées avec une meule (5.1) ou avec une fraise disque dans la plaque de pierre (1).

6. Elément chauffant de surface selon l'une quelconque des revendications 1 à 3, **caractérisé en ce que** des parties de renvoi (2c, 2c1, 2c2, 2c3) inclinées sont agencées en forme de courbe.

7. Elément chauffant de surface selon l'une quelconque des revendications 1 à 5, **caractérisé en ce qu'**une zone de transition (2d) en forme d'arc ou arrondie est prévue entre des parties longitudinales (2a*) droites et des parties de renvoi (2b*) droites.

8. Elément chauffant de surface selon la revendication 7, **caractérisé en ce que** l'inclinaison du canal (α) commence dans la zone de transition (2d) en forme d'arc et se poursuit le long de la partie de renvoi (2b*).

9. Elément chauffant de surface selon l'une quelconque des revendications 6 à 8, **caractérisé en ce qu'**au moins les courbes de canal, c'est-à-dire les parties de renvoi (2c, 2c1, 2c2, 2c3) en forme de courbe et/ou les zones de transition (2d) arrondies sont incorporées avec une meule bâton (6.1) ou une fraise à queue dans la plaque de pierre (1).

10. Elément chauffant de surface selon la revendication 9, **caractérisé en ce que** également les parties longitudinales (2a*) droites sont incorporées avec une meule bâton (6.1) ou une fraise à queue dans la plaque de pierre.

11. Elément chauffant de surface selon l'une quelconque des revendications 6 à 10, **caractérisé en ce que** l'inclinaison du canal (α) se situe dans la plage comprise entre 5° et 85° et est de préférence de 20° à 40°, en particulier environ 30°.

12. Elément chauffant de surface selon l'une quelconque des revendications 6 à 11, **caractérisé en ce que**, avec une section ronde des conducteurs chauffants (3), les canaux (2) sont arrondis dans leur fond par adaptation à la section ronde des conducteurs chauffant.

13. Elément chauffant de surface selon la revendication 12, **caractérisé en ce que**, pour la fabrication des arrondies du fond du canal (R2, R6), les meules ou fraises disques (5.1*) sont arrondis sur leur pourtour extérieur et/ou les meules bâtons (6.1*) sont arrondies sur leur tête d'usinage, en particulier avec une section de forme semi-circulaire ou un contour (R6b) conique.

14. Procédé pour l'introduction des conducteurs chauffants dans les canaux sur un élément chauffant de surface, en particulier selon l'une quelconque des revendications 1 à 11, une colle liquide ou pâteuse étant introduite dans le fond du canal de façon dosée dans une première quantité (M1) telle qu'elle modifie le conducteur chauffant (3) inséré ensuite dans le fond du canal et appuyé contre celui-ci, lequel a de préférence une section ronde avec un diamètre plus petit par rapport à la largeur du canal, dans la zone de la moitié inférieure du conducteur chauffant et remplit le volume du canal inférieur entre le conducteur chauffant (3), le fond du canal et les flancs du canal, et
le volume du canal au-dessus du conducteur chauffant (3) étant rempli avec une seconde quantité (M2) de colle, de sorte que le conducteur chauffant (3) est entouré des deux côtés par la colle, **caractérisé en ce que** l'insertion du conducteur chauffant (3) dans le fond du canal s'effectue après l'introduction d'une première quantité (M1) de la colle avec un galet de pression et d'avancement (11) allant dans le canal (3) avec un jeu latéral, lequel appuie avec son pourtour de galet profilé en fonction du conducteur chauffant (3) celui-ci dans le fond du canal et qui est amené pendant le déplacement le long de la partie de canal respective des conducteurs chauffants (3) par un galet de réserve ou similaire au moyen d'un guidage de câble (12), incliné de préférence dans le sens d'avancement (f1).

15. Procédé selon la revendication 14, **caractérisé en ce que** le galet de pression et d'avancement (11) et le guide-câble (12) sont capables de suivre de façon articulée le contour d'arcs ou d'arrondis de canal (2c, 2d) à passer dans le sens d'avancement (S1).

16. Agencement de galet pour la mise en oeuvre du procédé selon la revendication 14 ou 15, **caractérisé en ce qu'**un corps de palier (14) est articulé sur l'extrémité inférieure d'une tige directrice (13) de façon mobile et rotative autour de l'axe (13.1) de la tige directrice (13) et **en ce que** le corps de palier (14) présente un palier de roue (15) pour le galet de pression et d'avancement ainsi qu'un élément de guidage (12) pour le conducteur chauffant (3).
